(19) Europäisches Patentamt / European Patent Office / Office européen des brevets

(11) **EP 2 111 529 B1**

(12) **EUROPEAN PATENT SPECIFICATION**

(45) Date of publication and mention
of the grant of the patent:
**26.08.2015 Bulletin 2015/35**

(51) Int Cl.:
***G01B 11/26*** (2006.01)   ***G01N 21/21*** (2006.01)

(21) Application number: **06817274.1**

(22) Date of filing: **23.10.2006**

(86) International application number:
**PCT/US2006/041245**

(87) International publication number:
**WO 2008/051211 (02.05.2008 Gazette 2008/18)**

(54) **Directing a Beam of Electromagnetic Radiation into the end of an Optical Fibre Using Output from a Multiple Element Detector**

Verwendung eines Detektors mit mehreren Elementen um einen Strahl elektromagnetischer Strahlung auf das Ende einer optischen Fasers auszurichten

Utilisation d'un Détecteur à Élèments multiples pour diriger un Faisceau Électromagnétique dans une Extremité de Fibre Optique

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**28.10.2009 Bulletin 2009/44**

(60) Divisional application:
**13189966.8 / 2 698 598**

(73) Proprietor: **J.A. WOOLLAM CO. INC.**
**Lincoln NE 68508 (US)**

(72) Inventors:
• **Goeden, Chris**
**Lincoln**
**NE 68507 (US)**
• **Johs, Blaine**
**Lincoln**
**NE 68521 (US)**
• **Liphardt, Martin**
**Lincoln**
**NE 68523 (US)**
• **Pfeiffer, Galen**
**Lincoln**
**NE 68521 (US)**

(74) Representative: **Beck Greener**
**Fulwood House**
**12 Fulwood Place**
**London WC1V 6HR (GB)**

(56) References cited:
DE-A1-102004 016 322   US-A- 3 880 524
US-A- 4 558 949   US-A- 4 585 348
US-A- 4 902 900   US-A1- 2006 114 470
US-B1- 6 822 738   US-B1- 6 982 792
US-B1- 7 084 978   US-B2- 6 969 863

• "EXPERIMENT 8. Monolayer Characterization: Contact angles, Reflection Infrared Spectroscopy, and Ellipsometry", , 13 September 2006 (2006-09-13), pages 1-9, XP055090836, Retrieved from the Internet: URL:http://www2.chemistry.msu.edu/courses/cem419/cem372monolayeranalysis.pdf [retrieved on 2013-11-29]

**Description**

<u>TECHNICAL FIELD</u>

The disclosed invention relates to system and method for identifying the angle (AOI) and plane (POI) of incidence of a beam of electromagnetic radiation with respect to a sample surface, and more particularly to system and methodology for setting an (AOI) and/or (POI) of a beam of electromagnetic radiation to an alignment sample, and/or compensating detected errors between intended and realized Angle-Of-Incidence (AOI) and Plane-Of-Incidence (POI) settings in ellipsometer and the like systems, during analysis of test sample characterizing data acquired at actually realized (AOI) and/or (POI) with respect to a sample surface. The method optionally also uses data from alignment detector elements as sample characterizing data.

<u>BACKGROUND</u>

It is well known that the practice of Reflectometry, Spectrophotometry, Ellipsometry, Polarimetery and the like requires directing electromagnetic beams at samples at known angles

(AOI) and planes (POI) of incidence. Typical practice is to set an angle (AOI) and/or plane (POI) of incidence by the directing of an electromagnetic beam and/or the orienting of a sample such that the desired angular relationships are achieved. This can be tedious and requiring of relatively expensive equipment, where high precision is desired. However precise knowledge of the (AOI) and/or (POI) are necessary for achieving accurate analysis of sample characterizing data, and errors between intended and actually achieved (AOI) and/or (POI) lead to errors in analysis.

While present invention systems can be applied in any material system investigation system such as Reflectometer, Spectrophotometer, Polarimeter and the like Systems, an important application is in Ellipsometer Systems, whether Monochromatic or Spectroscopic. It should therefore be understood that Ellipsometry involves acquisition of sample system characterizing data at single or at multiple Wavelengths, and at one or more Angle (s )-of-Incidence (AOI) of a Beam of Electromagnetic Radiation to a surface of the sample system. Ellipsometry is generally well described in a great many number of publications, one such publication being a review paper by Collins, titled "Automatic Rotating Element Ellipsometers: Calibration, Operation and Real-Time Applications", Rev. Sci. Instrum, 61(8) (1990).

A typical goal in ellipsometry is to obtain, for each wavelength in, and angle of incidence of a beam of electromagnetic radiation caused to interact with a sample system, sample system characterizing PSI and DELTA values, (where PSI is related to a change in a ratio of magnitudes of orthogonal components $r_p/r_s$ in said beam of electromagnetic radiation, and wherein DELTA is related to a phase shift entered between said orthogonal components $r_p$ and $r_s$, caused by interaction with said sample system:

$$\text{TAN} (\psi) \, e(i\text{-}\Delta) = r_p/r_s$$

Continuing, Ellipsometer Systems generally include a source of a beam of electromagnetic radiation, a Polarizer, which serves to impose a known, (typically linear), state of polarization on a beam of electromagnetic radiation, a Stage for supporting a sample system, and an Analyzer which serves to select a polarization state in a beam of electromagnetic radiation after it has interacted with a sample system, and pass it to a Detector System for analysis therein. As well, one or more Compensator(s) can be present and serve to affect a phase retardance between orthogonal components of a polarized beam of electromagnetic radiation. A number of types of ellipsometer systems exist, such as those which include rotating elements and those which include modulation elements. Those including rotating elements include Rotating Polarizer (RP), Rotating Analyzer (RA) and Rotating Compensator (RC). While not limiting, a preferred embodiment is Rotating Compensator (RC) Ellipsometer Systems because they do not demonstrate "Dead-Spots" where obtaining ellipsometric data is difficult. They can read PSI and DELTA of a Material System over a full Range of Degrees with the only limitation being that if PSI becomes essentially zero (0.0), one can't then determine DELTA as there is not sufficient PSI Polar Vector Length to form the angle between the PSI Vector and an "X" axis. In comparison, Rotating Analyzer and Rotating Polarizer Ellipsometers have "Dead Spots" at DELTA'S near 0.0 or 180 Degrees and Modulation Element Ellipsometers also have a "Dead Spot" at PSI near 45 Degrees). The utility of Rotating Compensator Ellipsometer Systems should then be apparent. Another benefit provided by Rotating Compensator Ellipsometer Systems is that the Polarizer (P) and Analyzer (A) positions are fixed during data acquisition, and that provides benefit in that polarization state sensitivity to input and output optics during data acquisition is essentially non-existent. This enables relatively easy use of optic fibers, mirrors, lenses etc. for input/output. For insight it is noted that a Patent to Johs, No. 5,872,630 describes a material system investigation system comprising a source of a polychromatic beam of electromagnetic radiation, a polarizer, a stage for supporting a sample system, an analyzer, a dispersive optics and at least one detector system which contains a multiplicity of detector elements, said material system investigation system optionally comprising at least one compensator(s) positioned at a location selected from the group consisting of:

before said stage for supporting a sample system, and

after said stage for supporting a sample system, and

both before and after said stage for supporting a sample system;

such that when said material system investigation system is used to investigate a sample system present on said stage for supporting a sample system, at least one of said compensator(s) is/are caused to continuously rotate while a polychromatic beam of electromagnetic radiation produced by said source of a polychromatic beam of electromagnetic radiation is caused to pass through said polarizer and said compensator(s), said polychromatic beam of electromagnetic radiation being also caused to interact with said sample system, pass through said analyzer and interact with, said dispersive optics such that a multiplicity of essentially single wavelengths are caused to simultaneously enter a corresponding multiplicity of detector elements in said at least one detector system. Said 5,872,630 Patent to Johs is also disclosed as it shows use of a Beam Splitter to direct electromagnetic radiation into a Multi-element Alignment Detector (CH).

A Patent to Woollam et al, No. 5,582,646 is disclosed as it describes obtaining ellipsometric data through windows in a vacuum chamber, utilizing other than a Brewster Angle of Incidence and analysis of data in sensitive wavelength regions to enhance sensitivity.

Patent to Woollam et al, No. 5,373,359 is identified as it shows the presence of a Multi-Element Detector (24) applied to beam alignment in an Ellipsometer System.

Patent to Johs et al. No. 5,666,201 and Patent to Green et al., No. 5,521,706, and Patent to Johs et al., No. 5,504,582 are disclosed for general information as they pertain to Rotating Analyzer ellipsometer systems.

Patent to Bernoux et al., No. 5,329,357 is identified as it describes the use of optical fibers as input and output means in an ellipsometer system.

A Patent to Berger et al., No. 5,343,293 describes an Ellipsometer which comprises means to direct an electromagnetic beam onto a sample system.

A Patent to Canino, No. 4,672,196 describes a system which allows rotating a sample system to control the angle of incidence of a beam of electromagnetic radiation thereonto. Multiple detectors are present to receive the resulting reflected beams.

A Patent to Bjork et al., No. 4,647,207 describes an ellipsometer system in which reflecting elements are moved into the path of a beam of electromagnetic radiation.

Patent No. 5,412,473 to Rosencwaig et al., describes a ellipsometer system which simultaneously provides an electromagnetic beam at a sample surface at numerous angles of incidence thereto.

A European Patent, No. EP 1 034 413 B1 is disclosed as it describes a system for determining an angle of reflection an electromagnetic beam from a sample in an ellipsometer.

Patent to Hahn, No. 7,088,448 is also identified as it describes an approach to determining a the angle of incidence a beam of electromagentic radiation makes to a concave surface.

Patent US 6,822,738 describes also the use of optical fibers in an ellipsometer system and the use of an alignment detector.

Patents identified in by the Examiner Examination of a parent Application are Nos.:

4,558,949 to Uehara et al.;

5,801,835 to Mizutani et al.;

5,166,516 to Kajimura;

6,292,259 to Fossey et al.;

4,585,348 to Chastang et al.;

6,969,863 to Foth;

4,902,900 to Kamiya et al.;

3,880,524 to Dill et al.;

EP-1034413 by Hahn et al.

Even in view of the prior art, need remains a relatively inexpensive system and methodology which allows easily substantially setting desired (AOI) and/or (POI), wherein said system and method further enable detection of errors between intended and achieved (AOI) and/or (POI), said methodology then providing for correction of said errors during analysis of data acquired at actually realized, as opposed to intended (AOI) and (POI) settings. Said method can optionally also utilize alignment detector output signals as sample characterizing data.

DISCLOSURE OF THE INVENTION

The disclosed invention results from the application of various combinations of Alignment and, optionally, Data Detectors, configured to allow use of Alignment Detector output signals to direct physical orienting of samples, and/or to compensate Data Detector output signals for deviations between intended and realized Angle-of-Incidence (AOI) and Plane-of-Incidence (POI) as regards a relationship between a Beam of Electromagnetic Radiation and a Surface of a Sample. As described below, the Alignment Detectors can comprise a central hole through which the Beam of Electromagnetic Radiation passes, , after an interaction with a sample , or can receive a portion of a Beam of Electromagnetic Radiation directed thereto by a Beam Splitter. The Beam is focused onto an end of an optical fiber which convey Electromagnetic Radiation to a Data Detector.

In use, the disclosed invention applies signals from Multi-Element Alignment Detectors, (eg. Quad Detectors), in detection of actually achieved, as opposed to intended, Angle-of-Incidence (AOI) and Plane-of-Incidence (POI) alignment of beams of electromagnetic radiation, with respect to a Sample Surface. While signals developed by the Multi-Element Alignment Detectors in precision systems can be used to enable physical adjustment of the location and/or orientation of samples, and/or that of a source and detector of a beam electromagnetic radiation, which beam is caused to interact with a sample, the disclosed invention teaches utilization of signals from Multi-element Alignment Detectors which monitor incident and/or reflected beams of electromagnetic radiation, to provide information about errors between intended and actually achieved (AOI) and/or (POI). Said information can then be utilized to enable compensation of identified errors between intended and realized (AOI) and/or (POI) during analysis of data provided by a Data Detector. While not abandoning the practice of physical Sample orientation adjustment, the present invention teaches applying data which identifies actually achieved and known (AOI) and/or (POI) values to compensate Sample characterizing data, and therefore does not require expensive systems which are capable of precisely physically setting intended (AOI) and/or (POI) to intended values.

The disclosed invention provides for use of multiple element alignment detectors in the monitoring of an electromagnetic beam reflected from a sample which is then focused to enter an accessible end of an optical fiber, as opposed to directing said reflected electromagnetic beam directly into a data detector.

Further, some embodiments of the disclosed invention utilize beam splitters to provide a portion of an electromagnetic beam to the multi-element alignment detector, with the remainder of the electromagnetic beam being directed toward and detected by an optical fiber. In other embodiments a multi-element detector provides a hole through which a beam of electromagnetic radiation passes in use.

It is also noted that where a sample is aligned so that exactly the intended (AOI) and (POI) are achieved, rotating of the sample about an axis perpendicular to the surface thereof, (eg. Generalized Ellipsometry), as might be done to investigate anisotropy in a sample can result in achieving other than the intended (AOI) and/or (POI) at various rotation positions. Readjustment of the (AOI)/(POI) at each rotation setting is typically not practical, but the disclosed invention correction procedure to compensate the (AOI) and/or (POI) at various rotation settings during data analysis can be relatively easily implemented. In light of the foregoing it is noted that where a complete 360 degree rotation of a sample about the axis perpendicular to the surface thereof can provide data which is zone averaged to aid with compensating differences in (POI) at different rotation settings, such an approach to compensating (AOI), which can vary at each rotation setting, is not applicable.

The present invention is as set out in the appended claims.

The disclosed invention method enables the maintaining of the spatial relationship between the focal point of a first focusing lens and the end of an optical fiber which directs electromagnetic radiation into a detector in an ellipsometer and comprises the steps of:

a) providing an alignment sample and a source of electromagnetic radiation and a optical fiber with an accessible end; optionally practicing steps b and c simultaneously:
b) orienting the alignment sample such that a portion,, (eg. a majority thereof), of a beam of electromagnetic radiation produced by said source is caused to obliquely impinge thereupon, reflect therefrom, and via the first focusing lens enter the accessible end of said optical fiber;

c) causing a portion of the beam of electromagnetic radiation reflected from the sample to enter a multi-element alignment detector via a second

focusing lens, and positioning said multi-element alignment detector so that signals are developed by each of its elements;

d) removing said alignment sample and placing a test sample in its place;

e) adjusting the orientation of the test sample so that the multi-element alignment detector provides substantially the same output signals as was developed in step c is achieved; with the result being that the portion of the electromagnetic beam not caused to enter said multi-element alignment detector is caused to enter the accessible end of the optical fiber via said first focusing lens; wherein the known signals developed by each of the elements of said multi-element detector are utilized to effect change in the vertical position of the sample, the vertical position being along the perpendicular from the sample surface, by using the fact that if the vertical position of the sample is not appropriate to direct the reflected beam onto the multi-element alignment detector elements, no signal will be developed thereby.

Said method can further comprise using signals developed by one or more alignment detector elements as sample characterizing data along with, or in place of that provided by the data detector.

Said method can further comprise:

providing a data detector attached to a distal end of said optical fiber so that electromagnetic radiation entered to said optical fiber is detected by said data detector; and

characterizing said test sample by analyzing the data obtained from the data detector in combination with signals from the elements of the multi-element alignment detector.

Practice of this method will typically require use of output signals from the multi-element alignment detector to physically re-orient the test sample, however, where the beam is focused other than perfectly onto the end of the optical fiber, but sufficiently well focused thereupon to convey input to the data detector, the multi-element alignment detector signals can be utilized as described before to mediate compensation of data detector output for actually achieved, as opposed to intended, (AOI) and POI settings.

It is noted that an uneven intensity of the beam of electromagnetic radiation produced by said source, (e.g. caused by a partial blocking thereof), over its cross-section can also cause a change in the output of the multiple element detector which can be at least partially compensated by practice of the - recited method. Note, the "data sets" provided by output from a multi-element alignment detector just identified can comprise signal intensities from each element thereof in identified correspondence with alignment sample angle-of-incidence and plane-of-incidence combinations. An example Data Set might appear as:

| FOR A FIRST SET (API) AND (POI) | |
| --- | --- |
| OUTPUT FROM ALIGNMENT POIDETECTOR ELEMENTS | CORRESPONDING ACTUAL API & |
| ELEMENT 1 INTENSITY | |
| ELEMENT 2 INTENSITY | (AOI) = YYY. YY DEGREES |
| ELEMENT 3 INTENSITY | (POI) = XXX . XX DEGREES |
| ELEMENT 4 INTENSITY | |
| ⋮ | |
| ELEMENT N INTENSITY | |
| FOR A SECOND SET (AOI) AND (POI) | |
| OUTPUT FROM ALIGNMENT AOI & POIDETECTOR ELEMENTS | CORRESPONDING ACTUAL |
| ELEMENT 1 INTENSITY | |
| ELEMENT 2 INTENSITY | (AOI) = YYY . YY DEGREES |
| ELEMENT 3 INTENSITY | (POI) = XXX . XX DEGREES |
| ELEMENT 4 INTENSITY | |
| ⋮ | |
| ELEMENT N INTENSITY | |
| ETC. | |

said data set having a multiplicity of additional similar known angle-of-incidence and plane-of-incidence setting combinations as set in Step e in the just preceding example, and corresponding actual (AOI) and (POI) values.

It is also mentioned that use of the terminology "above" is not meant to limit the invention to the case wherein a second source of a beam of electromagnetic radiation positioned above said sample is "above" only in the sense of laboratory coordinates. That is, rotating the ellipsometer or the like system so that the second source is not above the sample in laboratory coordinates does not remove the system from the Claims as said terminology is used herein.

It is also noted that the disclosed invention system can operate at at least one wavelength in at least one wavelength range, such as:

    RADIO;
    MICROWAVE;
    PIR;
    IR;
    NIR-VIS-NUV;
    UV;
    DUV;
    VUV;
    EUV;
    XRAY.

The described invention can be practiced in any type of reflectometer or ellipsometer, (eg. Rotating Polarizer, Rotating Analyzer, Rotating Compensator, Modulation Element).

The disclosed invention will be better understood by reference to the Detailed description Section, in conjunction with the Drawings.

SUMMARY OF THE INVENTION

A primary purpose and/or objective of the disclosed invention is to teach a system for enabling detection and correction of errors in (AOI) and/or POI in analysis of sample characterizing data produced by material system investigation systems such as ellipsometers, polarimeters, reflectometers, spectrophotometers and the like systems.

Another primary purpose and/or objective of the disclosed invention is to teach a system for maintaining the spatial relationship between, for instance, the focal point of a lens and the end of a optical fiber which directs electromagnetic radiation to a detector in an ellipsometer or the like system.

It is another purpose and/or objective of the disclosed invention is to teach construction of a Data Set by, while changing the orientation of said alignment sample through a multiplicity of known angle-of-incidence (AOI) and plane-of-incidence (POI) combinations, obtaining a data set which corresponds to signals from each from said multi-element alignment detector. Said "Tabulated" Data Set which identifies combinations of Alignment Detector Elements outputs to an (AOI) and (POI) combination can be applied to compensate (AOI) and/or (POI) values during analysis of Sample Characterizing Data obtained from a Data Detector.

It is another purpose and/or objective of the disclosed invention is to disclose using alignment detector signals instead of or along with data from a data detector to characterize said sample, in addition to using signals from said alignment detector to provide alignment data regarding said sample.

Other purposes and/or objectives will become obvious from a reading of the Specification and Claims.

BRIEF DESCRIPTION OF THE DRAWINGS

    Figs. 1 a and 1 b show multiple-element detectors (AD).

    Figs. 2 and 3 demonstrate an approach to setting an angle-o[pound]-incidence using a Fig 1 a type multiple element detector.

    Fig. 4 demonstrates a multiple element detector positioned vertically above a sample (S).

    Fig. 5 shows use of a multiple element detector (AD) through which a reflected electromagnetic beam (LB) passes before entering a detector (DET).

Fig. 6 shows a beam splitter (BS) in a reflected electromagnetic beam (LB) passes before entering a detector (DET), which beam splitter directs a portion of the electromagnetic beam into a Fig. 1b type multiple element detector.

Fig. 7 shows a multiple element detector (AD) in a reflected electromagnetic beam (LB) passes before entering a detector (DET).

Fig. 8 shows a combined system comprising three multiple element detectors shown separately in Figs. 4, 6 and 7.

Fig. 9 demonstrates use of a multiple element detector (AD) which, via a beam splitter (BS), receives a focused portion of an electromagnetic beam (LB) reflected from a sample (S), the remainder of said electromagnetic beam (LB) is focused into an accessible end of a fiber optic (FO).

<u>DETAILED DESCRIPTION</u>

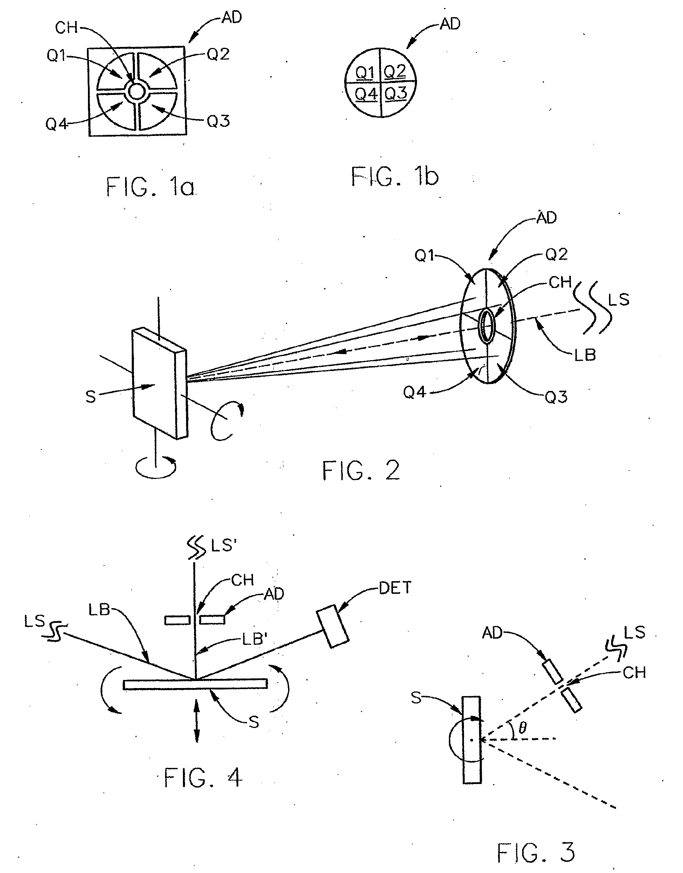

Figs. 1 a and 1 b show multiple-element detectors (AD). Fig. 1 a shows a Quad-Detector with four detector regions (Q1), (Q2), (Q3) and (Q4). Note also the presence of a central hole (CH). Fig. 1b shows a Quad-detector (AD) with four detector regions (Q1), (Q2), (Q3) and (Q4) which are more closely packed and no central hole is present.

Figs. 2 and 3 demonstrate an approach to setting an angle-of-incidence using a Fig. 1 a type multiple element detector. Said approach involves providing a beam of electromagnetic radiation (LB) from Source (LS), which beam (LB) is caused to pass through central hole (CH) in multiple element detector (AD) and reflect from Sample (S). Sample (S) is rotated so that equal amounts of electromagnetic radiation reflect to the four detector regions (Q1), (Q2), (Q3) and (Q4). Once the beam (LB) is thus caused to be oriented perpendicular to the surface of the Sample (S) it is rotated through a known angle ($\theta$) as shown in Fig. 3, thereby providing a known angle of incidence of ($\theta$) to the Sample (S).

Figure 4 shows a setup outside the scope of the present invention.
Fig. 4 demonstrates a Fig. 1 a type multiple element detector (AD) positioned vertically above a sample (S). In use the Sample a beam (LB') of electromagnetic radiation is provided by Source (LS') and Sample (S) is rotated around orthogonal axes so that the various detector elements in the Fig. 1 a type multiple element detector (AD) receive substantially equal amounts of reflected radiation, thereby showing that the surface of the Sample, at the point the beam (LB') is oriented perpendicular to said beam (LB'). This approach has the benefit that vertical motion of the Sample (S) has no effect on the alignment process of the Sample (S).

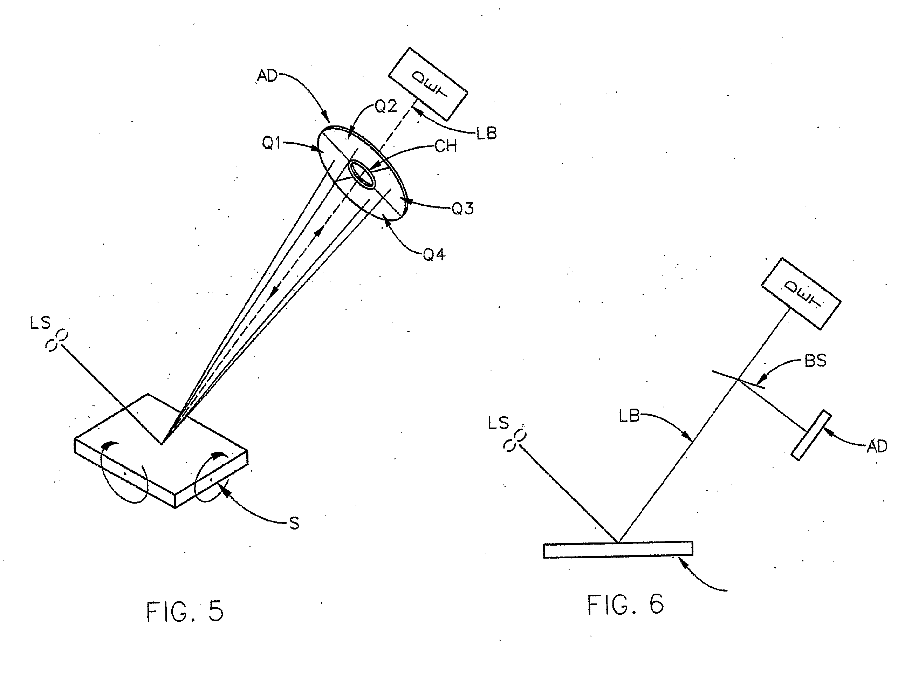

Figure 5 shows a setup outside the scope of the present invention.
Fig. 5 shows use of a multiple element detector (AD) through which a reflected electromagnetic beam (LB) passes before entering a detector (DET). When Sample (S) is properly aligned so that beam (LB) proceeds to Detector (DET) as desired, the detector elements (Q1), (Q2), (Q3) and (Q4) each provide substantially the same output.

Figure 6 shows a setup outside the scope of the present invention.
Fig. 6 shows a beam splitter (BS) in a reflected electromagnetic beam (LB) passes before entering a detector (DET), which beam splitter directs a portion of the electromagnetic beam into a Fig. 1b type multiple element detector. Again, when Sample (S) is properly aligned so that a portion of beam (LB) proceeds to Detector (DET) as desired, the detector elements (Q1), (Q2), (Q3) and (Q4) each provide substantially the same output.

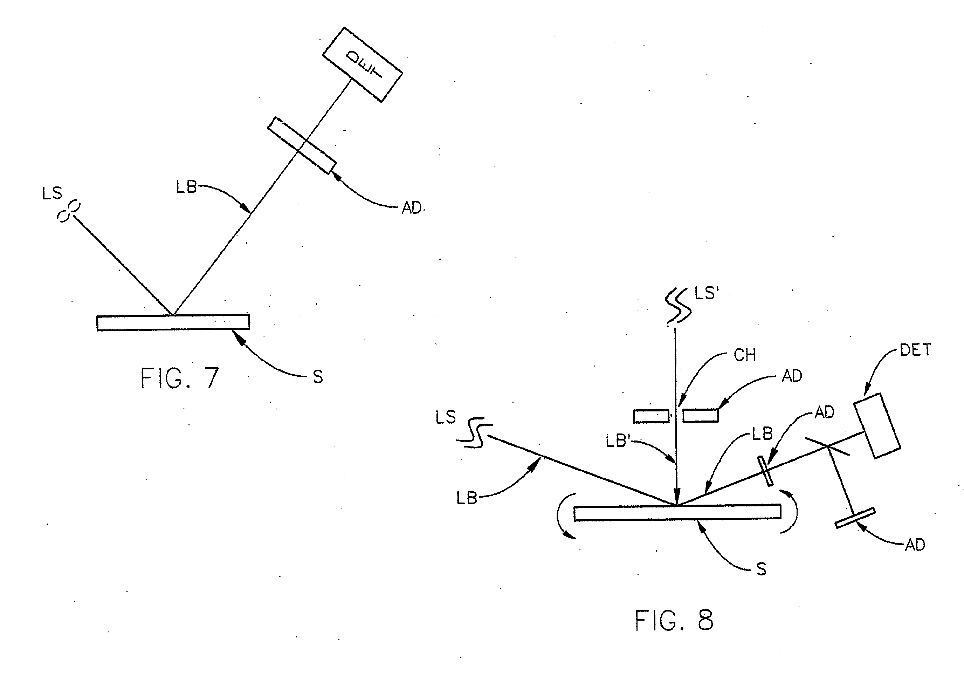

Figure 7 shows a setup outside the scope of the present invention.
Fig. 7 shows a multiple element detector (AD) in a reflected electromagnetic beam (LB) passes before entering a detector (DET). Fig. 7 is basically a side view of the situation shown in perspective in Fig. 5.

Figure 8 shows a setup outside the scope of the present invention.
Fig. 8 shows a combined system comprising three multiple element detectors each identified as (AD), and which are shown separately in Figs. 4, 6 and 7. With all such multiple element detectors (AD) are available output from each can be utilized or not as is found to be optimum.

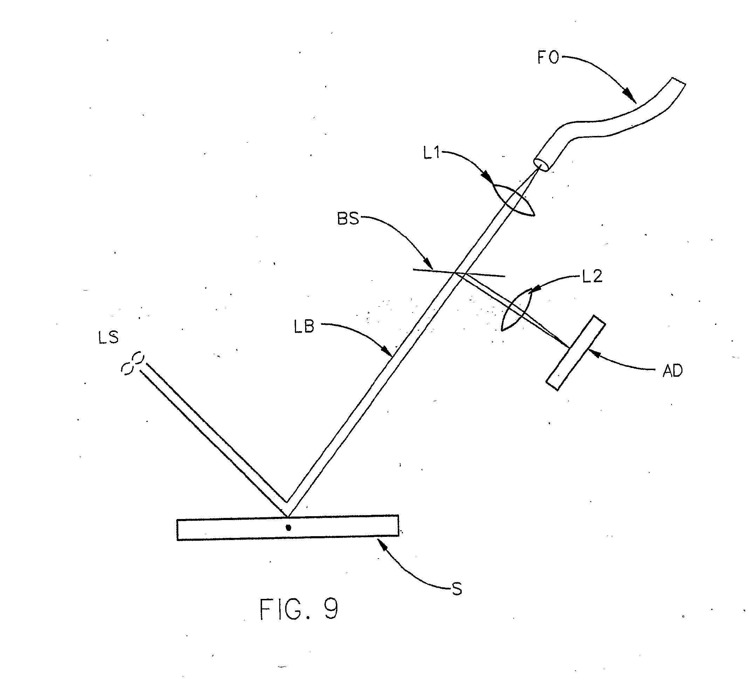

Fig. 9 demonstrates use of a multiple element detector (AD) which, via a beam splitter (BS), receives a focused portion of an electromagnetic beam (LB) reflected from a sample (S), the remainder of said electromagnetic beam (LB) is focused into an accessible end of a fiber optic (FO). After calibration to properly coordinated equal output from each of the alignment detector elements (Q1), (Q2), (Q3) and (Q4) to proper placement of focus point by Lens (L1), it should be appreciated that monitoring output of the alignment detector elements (Q1), (Q2), (Q3) and (Q4) and response to change therein can be used to keep the beam focused by Lens (L1) properly positioned on the accessible end of the Fiber Optic (FO). Further, after the initial orienting of a sample via physical motion, signals developed by alignment detector elements (Q1), (Q2), (Q3) and (Q4) can be applied to compensate minor deviations of (AOI) and (POI) from intended values. Note also that a Lens (L2) is present to focus the portion of the beam (LB) which is directed thereat by Beam Splitter (BS). It is noted that a similar arrangement could be substituted for the Alignment Detectors (AD) shown in Figs. 4 and 8.

The signal generated by a multiple element detector (AD) is also used to adjust the vertical height of a Sample (S), as the system in Fig. 4 can be alternatively interpreted to show by realizing that if the sample height is not appropriate to direct the reflected beam onto the multiple element alignment detector elements (Q1), (02), (Q3) and (Q4), no signal will be developed thereby.

## Claims

1. A method of maintaining the spatial relationship between the focal point of a first focussing lens (L1) and the end of an optical fiber (F0) which directs electromagnetic radiation to a detector in an ellipsometer, comprising the steps of:

   a) providing a sample (S) and a source of electromagnetic radiation (LS) and an optical fiber with an accessible end;
   b) orienting the sample such that a beam of electromagnetic radiation (LB) produced by said source is caused to obliquely impinge thereupon, reflect therefrom, and via the first focusing lens (L1) enter the accessible end of said optical fiber;
   c) causing a portion of the beam of electromagnetic radiation reflected from the sample to enter a multi-element alignment detector (AD) via a second focusing lens (L2), and positioning said multi-element alignment detector so that signals are developed by each of its elements (Q1, Q2, Q3, Q4);
   wherein
   the said sample (S) is an alignment sample; and,
   the method comprises the steps of:
   d) removing said alignment sample and placing a test sample in its place;
   e) adjusting the orientation of the test sample so that the multi-element alignment detector (AD) provides substantially the same output as was achieved in step c;
   with the result being that the portion of the electromagnetic beam (LB) not caused to enter said multi-element alignment detector, is caused to enter the accessible end of the optical fiber (F0) via said first focusing lens (L1);
   wherein
   the known signals developed by each of the elements of said multi-element detector (AD) are utilized to effect change in the vertical position of the sample (S), the vertical position being along the perpendicular from the sample surface, by using the fact that if the vertical position of the sample is not appropriate to direct the reflected beam onto the multi-element alignment detector elements, no signal will be developed thereby.

2. A method as claimed in Claim 1, in which the portion of the beam of electromagnetic radiation (LB) reflected from the sample (S) and caused to enter the multi-element alignment detector (AD) is produced by a beam splitter (BS).

3. A method as claimed in Claim 1 or Claim 2, further comprising:

   providing a data detector attached to a distal end of said optical fiber (F0) so that electromagnetic radiation entered to said optical fiber is detected by said data detector; and
   characterizing said test sample (S) by analyzing the data obtained from the data detector in combination with signals from the elements (Q1, Q2, Q3, Q4) of the multi-element alignment detector (AD).

## Patentansprüche

1. Verfahren zum Bewahren der räumlichen Beziehung zwischen dem Fokuspunkt einer ersten Fokuslinse (L1) und dem Ende eines Lichtwellenleiters (F0), welcher elektromagnetische Strahlung an einen Detektor in einem Ellipsometer leitet, umfassend die folgenden Schritte:

a) Bereitstellen einer Probe (S) und einer Quelle elektromagnetischer Strahlung (LS) und eines Lichtwellenleiters mit einem zugänglichen Ende;

b) Ausrichten der Probe, sodass ein Strahl elektromagnetischer Strahlung (LB), der von der Quelle erzeugt wird, dazu gebracht wird, quer darauf aufzutreffen, davon reflektiert zu werden und über die erste Fokuslinse (L1) in das zugängliche Ende des Lichtwellenleiters einzutreten;

c) Verursachen des Eintretens eines Teils des Strahls elektromagnetischer Strahlung, der von der Probe reflektiert wird, über eine zweite Fokuslinse (L2) in einen Mehrelement-Justierdetektor (AD) und Positionieren des Mehrelement-Justierdetektors, sodass von jedem seiner Elemente (Q1, Q2, Q3, Q4) Signale erzeugt werden;

wobei

die Probe (S) eine Justierprobe ist; und

das Verfahren die folgenden Schritte umfasst:

d) Entfernen der Justierprobe und Platzieren eines Prüfmusters an ihrer Stelle;

e) Anpassen der Ausrichtung des Prüfmusters, sodass der Mehrelement-Justierdetektor (AD) im Wesentlichen die gleiche Ausgabe bereitstellt, wie sie in Schritt c erreicht wurde;

sodass der Teil des elektromagnetischen Strahls (LB), der nicht dazu gebracht wurde, in den Mehrelement-Justierdetektor einzutreten, dazu gebracht wird, über die erste Fokuslinse (L1) in das zugängliche Ende des Lichtwellenleiters (FO) einzutreten;

wobei

die bekannten Signale, die von jedem der Elemente des Mehrelement-Justierdetektors (AD) erzeugt werden, dazu verwendet werden, um eine Veränderung hinsichtlich der vertikalen Position der Probe (S) zu verursachen, wobei die vertikale Position entlang dem Lot von der Probenoberfläche verläuft, indem die Tatsache ausgenutzt wird, dass wenn die vertikale Position der Probe nicht geeignet ist, um den reflektierten Strahl zu den Mehrelement-Justierdetektorelementen zu leiten, dadurch kein Signal erzeugt wird.

2. Verfahren nach Anspruch 1, bei welchem der Teil des Strahls elektromagnetischer Strahlung (LB), der von der Probe (S) reflektiert und dazu gebracht wird, in den Mehrelement-Justierdetektor (AD) einzutreten, von einem Strahlenteiler (BS) erzeugt wird.

3. Verfahren nach Anspruch 1 oder Anspruch 2, ferner umfassend:

Bereitstellen eines Datendetektors, der mit einem distalen Ende des Lichtwellenleiters (FO) verbunden ist, sodass elektromagnetische Strahlung, die in den Lichtwellenleiter eingetreten ist, von dem Datendetektor erkannt wird; und

Charakterisieren des Prüfmusters (S) durch Analyse der erhaltenen Daten aus dem Datendetektor zusammen mit Signalen von den Elementen (Q1, Q2, Q3, Q4) des Mehrelement-Justierdetektors (AD).

**Revendications**

1. Une méthode de maintien des relations spatiales entre le point de mire d'une première lentille de focalisation (L1) et l'extrémité d'une fibre optique (FO) qui dirige un rayonnement électromagnétique vers un détecteur dans un ellipsomètre, comprenant les étapes suivantes :

a) fourniture d'un échantillon (S) et d'une source de rayonnement électromagnétique (LS), ainsi qu'une fibre optique avec une extrémité accessible ;

b) orientation de l'échantillon de façon à déterminer l'incidence oblique sur celui-ci d'un faisceau de rayonnement électromagnétique (LB) produit par ladite source, sa réflexion par celui-ci, et l'entrée dans l'extrémité accessible de ladite fibre optique à travers la première lentille de focalisation (L1) ;

c) entrée d'une partie du faisceau de rayonnement électromagnétique reflété par l'échantillon dans un détecteur d'alignement à multiéléments (AD) via une deuxième lentille de focalisation (L2), et positionnement dudit détecteur d'alignement à multiéléments de sorte que des signaux soient développés par chacun de ses éléments (Q1, Q2, Q3, Q4) ;

dans laquelle

ledit échantillon (S) est un échantillon d'alignement ; et

la méthode comprend les étapes suivantes :

d) enlèvement dudit échantillon d'alignement et remplacement de celui-ci par un échantillon d'essai ;

e) ajustage de l'orientation de l'échantillon d'essai de telle façon que le détecteur d'alignement à multiéléments (AD) produise substantiellement la même sortie que celle qui avait été réalisée au point c ;

le résultat étant que la portion du faisceau électromagnétique (LB) dont l'entrée dans ledit détecteur d'alignement n'est pas causée est entrée dans l'extrémité accessible de la fibre optique (FO) via ladite première lentille de focalisation (L1) ;

dans laquelle

les signaux connus développés par chacun des éléments dudit détecteur à multiéléments (AD) sont utilisés pour apporter des changements à la position verticale de l'échantillon (S), la position verticale étant le long de la partie perpendiculaire à la surface de l'échantillon, en utilisant le fait que si la position verticale de l'échantillon n'est pas appropriée pour diriger le faisceau réfléchi vers les éléments détecteurs d'alignement à multiéléments, aucun signal ne sera développé.

2. Une méthode selon la revendication 1, dans laquelle la partie du faisceau à rayonnement électromagnétique (LB) reflété de l'échantillon (S), et dont l'entrée dans le détecteur d'alignement à multiéléments (AD) est causée, est produite par un diviseur de faisceau (BS).

3. Une méthode selon la revendication 1 ou la revendication 2, comprenant également :

l'emploi d'un détecteur de données fixé à une extrémité distale de ladite fibre optique (FO), de sorte que le rayonnement électromagnétique entré dans ladite fibre optique soit détecté par ledit détecteur de données ; et la caractérisation dudit échantillon d'essai (S) par l'analyse des données obtenues du détecteur de données conjointement avec des signaux des éléments (Q1, Q2, Q3, Q4) du détecteur d'alignement à multiéléments (AD).

FIG. 1a

FIG. 1b

FIG. 2

FIG. 4

FIG. 3

FIG. 6

FIG. 5

FIG. 8

FIG. 7

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 5872630 A, Johs
- WO 5582646 A, Woollam
- WO 5373359 A, Woollam
- WO 5666201 A, Johs
- WO 5521706 A, Green
- WO 5504582 A, Johs
- WO 5329357 A, Bernoux
- WO 5343293 A, Berger
- WO 4672196 A, Canino
- WO 4647207 A, Bjork
- WO 5412473 A, Rosencwaig
- EP 1034413 B1

- WO 7088448 A, Hahn
- US 6822738 B
- EP 4558949 A, Uehara
- EP 5801835 A, Mizutani
- EP 5166516 A, Kajimura
- EP 6292259 A, Fossey
- EP 4585348 A, Chastang
- EP 6969863 A, Foth
- EP 4902900 A, Kamiya
- EP 3880524 A, Dill
- EP 1034413 A, Hahn

### Non-patent literature cited in the description

- **COLLINS.** Automatic Rotating Element Ellipsometers: Calibration, Operation and Real-Time Applications. *Rev. Sci. Instrum,* 1990, vol. 61 (8